# EUROPEAN PATENT APPLICATION

(11) **EP 1 641 176 A1**
(43) Date of publication of application: **29.03.2006**
(21) Application number: 04292818.4
(22) Date of filing: 29.11.2004
(51) Int. Cl.: H04L 9/08

(54) **Escrowing services oriented encryption and decryption methods**

(30) Priority: 27.09.2004 EP 04292308
(71) Applicant: Axalto SA, 92120 Montrouge (FR)
(72) Inventor: Vassilev, Apostol, c/o Axalto S.A., 92120 Montrouge (FR); Novi, Mattew, c/o Axalto S.A., 92120 Montrouge (FR); Smadja, Philippe, c/o Axalto S.A., 92120 Montrouge (FR)

(57) **Abstract**

An encryption method for encrypting a data file F, wherein the method comprises:
a) a selection step consisting in selecting parts of the data file HF,
b) a block generation step consisting in generating:
   - an escrow block EB₀ based on selected parts of the data file HF, and
   - an escrow public encryption key EPEK, and an owner block EB₁ based on selected parts of the data file HF and an owner encryption key OEK,
c) a final data file generation step consisting in generating an encrypted data file FE based on the escrow block EB₀, and generating a final data file FF by combining the encrypted data file FE, the escrow block EB₀ and the owner block EB₁.

## Description

### FIELD OF THE INVENTION

An aspect of the invention relates to an encryption method for encrypting a data file. The data file may contain, for example, secret or sensitive information. A particular application of the invention concerns escrowing services.
Others aspects of the invention relate to an owner decryption method and also an escrow decryption method for decrypting an encrypted data file according to the encryption method of the invention.
Finally, others aspects of the invention relate to secure hardware for performing the encryption method and/or the decryption methods of the invention, and corresponding computer-program products.

### BACKGROUND OF THE INVENTION

Today, most secret or sensitive information (e.g. documents, data...) is protected by encryption with known cryptographic algorithms. The owner of the secret or sensitive information can encrypt and subsequently decrypt (recover the information) by applying the proper cryptographic algorithm and inputting the correct cryptographic keys. Generally, the keys themselves are protected by a second set of keys, usually available only for the owner and stored in a secure repository. It is known to use a hardware secure module (generally called HSM) or a token (for example a microprocessor type card also called a smart-card) as a secure repository for the cryptographic keys.
Now, state entities relating to security (e.g. defense entity, law enforcement entity...) are authorized by law in many countries (e.g. United States of America, France...) to recover secret information encrypted with services and tools approved for use by individuals, corporate, and government organizations.
In addition, corporations may want to be able to recover sensitive information encrypted by present or former employees who are unable or unwilling to recover it themselves.
Making cryptographic keys available to selected legally entitled third parties (state entities, corporations) without exposing them to undesired third parties is known as key escrowing services.
A known key escrowing service is capable of encrypting the cryptographic key used for encrypting the sensitive information with the public key of the escrowing service.

The resulting escrowed encrypted cryptographic key or escrow block is then appended or pre-pended to the encrypted sensitive information. The cryptographic key is also encrypted with the owner's key and the resulting owner block is also appended or pre-pended to the encrypted sensitive information. This escrowing method have a significant weakness because an attacker can remove the escrow block and thus prevent the selected legally entitled third party from being able to access the sensitive information while the owner of the sensitive information is not affected by the removal or alteration of the escrow block.

### SUMMARY OF THE INVENTION

One goal of the invention is to solve at least one shortcoming of the prior art.
According to the invention, the encryption method adapted for an escrowing service implementation binds cryptographically an escrow block with at least a part of the encrypted sensitive information.

Thus, in case the escrow block is altered or removed, neither the escrowing authority, nor the owner of the sensitive information will be able to recover the sensitive information themselves: the sensitive information will be effectively lost for everyone.

More precisely, one aspect of the present invention relates to an encryption method for encrypting a data file. The method comprises:
a) a selection step consisting in selecting parts of the data file,
b) a block generation step consisting in generating:
   - an escrow block based on selected parts of the data file, and
   - an escrow public encryption key, and an owner block based on selected parts of the data file and an owner encryption key, and
c) a final data file generation step consisting in generating an encrypted data file based on the escrow block, and generating a final data file by combining the encrypted data file, the escrow block and the owner block.

In particular, the selection step consists in generating a hashed file by calculating a first hashing function of the data file of an owner.
The block generation step consists in:
- generating a secret key by generating a pseudo-random number, and calculating an invertible function of the hashed filed and the pseudo-random number,
- generating an escrow block by processing a public key type encryption algorithm of the secret key and an escrow public encryption key,
- generating an owner block by processing an owner type encryption algorithm of the secret key and an owner encryption key,
The final data file generation step consists in:
- generating a data file key by calculating a second hashing function of the secret key combined with the escrow block,
- generating an encrypted data file by processing a secret key type encryption algorithm of the data file key and the data file, and
- generating a final data file by combining the encrypted data file, the escrow block and the owner block.

The owner type encryption algorithm may be a public key type encryption algorithm or a secret key type encryption algorithm.

Advantageously, the first and the second hashing functions are identical.

Advantageously, with the invention more than one escrowing third party can be configured. The block for each escrowing service is encrypted with the public key of the service so that only the corresponding authority can recover it. The escrowing services may be organized in a two-level hierarchy: a primary escrow service and one or more secondary escrowing services.
According to this option, the encryption method may further comprise the additional steps of:
- generating at least one second escrow block by processing at least a second public key type encryption algorithm of the secret key and at least a second escrow public encryption key,
- generating a final data file by combining the encrypted data file, the escrow block, the owner block and the at least one second escrow block.
   On the one hand, the primary escrow service block does not depend on any other escrow service block for data file recovery by the primary escrow service.

On the other hand, the secondary escrow services and the owner of the data file depend on the availability and integrity of the primary escrow service block in order to recover the data file.
If the block corresponding to the owner or one or more secondary escrow services is altered or removed, the corresponding entity can refer to the primary escrow service authority to recover the information. This reference can typically be facilitated by a legal framework established in the country of escrow service.

Another aspect of the invention relates to an owner decryption method for decrypting a final data file. Said method comprises the steps of:
a) generating a secret key by processing an inverse owner type encryption algorithm of an owner encryption key and the owner block,
b) generating a data file key by calculating an owner hashing function of the secret key combined with the escrow block, and
c) generating an unencrypted file by processing an inverse secret key type encryption algorithm of the data file key and the encrypted data file.

The inverse owner type encryption algorithm may be an inverse public key type encryption algorithm or an inverse secret key type encryption algorithm.

A further aspect of the invention relates to an escrow decryption method for decrypting a final data file. Said method comprises the steps of:
a) generating a secret key by processing an inverse public key type encryption algorithm of an escrow public encryption key and the escrow block,
b) generating a data file key by calculating an escrow hashing function of the secret key combined with the escrow block, and
c) generating an unencrypted file by processing an inverse secret key type encryption algorithm of the data file key and the encrypted data file.

A still further aspect of the invention relates to a secondary escrow decryption method for decrypting a final data file. Said method comprises the steps of:
a) generating a secret key by processing an inverse second public key type encryption algorithm of the second escrow public encryption key and the second escrow block,
b) generating a data file key by calculating an escrow hashing function of the secret key combined with the escrow block, and
c) generating an unencrypted file by processing an inverse secret key type encryption algorithm of the data file key and the encrypted data file.

According to a still further aspect of the invention, there is provided a secure hardware comprising at least one encrypting circuit and a memory for storing a data file. The encrypting circuit is arranged to carry out the steps of the encryption method.
According to a still further aspect of the invention, there is provided a secure hardware comprising at least one escrow decrypting circuit and a memory for storing a final data file. The decrypting circuit is arranged to carry out the steps of the primary escrow decryption method. The decrypting circuit may also be arranged to carry out the steps of the secondary escrow decryption method.
According to a still further aspect of the invention, there is provided a secure hardware comprising at least one owner decrypting circuit and a memory for storing a final data file. The decrypting circuit is arranged to carry out the steps of the owner decryption method.
The secure hardware may be a hardware security module or a microprocessor type card coupled to a computer.

According to a still further aspect of the invention, there is provided an encrypting computer-program product for a secure hardware arranged to encrypt a data file, the computer-program product comprising a set of instructions that, when loaded into an encrypting circuit of the secure hardware, causes the secure hardware to carry out the steps of the encryption method.
According to a still further aspect of the invention, there is provided an escrow decrypting computer-program product for a secure hardware arranged to decrypt a data file, the computer-program product comprising a set of instructions that, when loaded into a decrypting circuit of the secure hardware, causes the secure hardware to carry out the steps of the primary escrow decryption method. The software may also cause the secure hardware to carry out the steps of the secondary escrow decryption method.

According to a still further aspect of the invention, there is provided an owner decrypting computer-program product for a secure hardware arranged to decrypt a data file, the computer-program product comprising a set of instructions that, when loaded into a decrypting circuit of the secure hardware, causes the secure hardware to carry out the steps of the owner decryption method.

### BRIEF DESCRIPTION OF THE DRAWINGS

The present invention is illustrated by way of example and not limited to the accompanying Figures, in which like references indicate similar elements:
Figure 1 schematically illustrates an embodiment of the invention,
Figures 2.A, 2.B, 2.C, 2.D, 2.E, 2.F and 2.G schematically illustrates the encryption method according to the invention,
Figure 3 schematically illustrates a first step of the owner or escrow decryption method according to the invention,
Figures 4.A, 4.B and 4.C schematically illustrates the owner decryption method according to the invention,
Figures 5.A, 5.B and 5.C schematically illustrates the escrow decryption method according to the invention,
Figure 6 schematically illustrates an alternative of the invention.

### DETAILED DESCRIPTION OF THE INVENTION

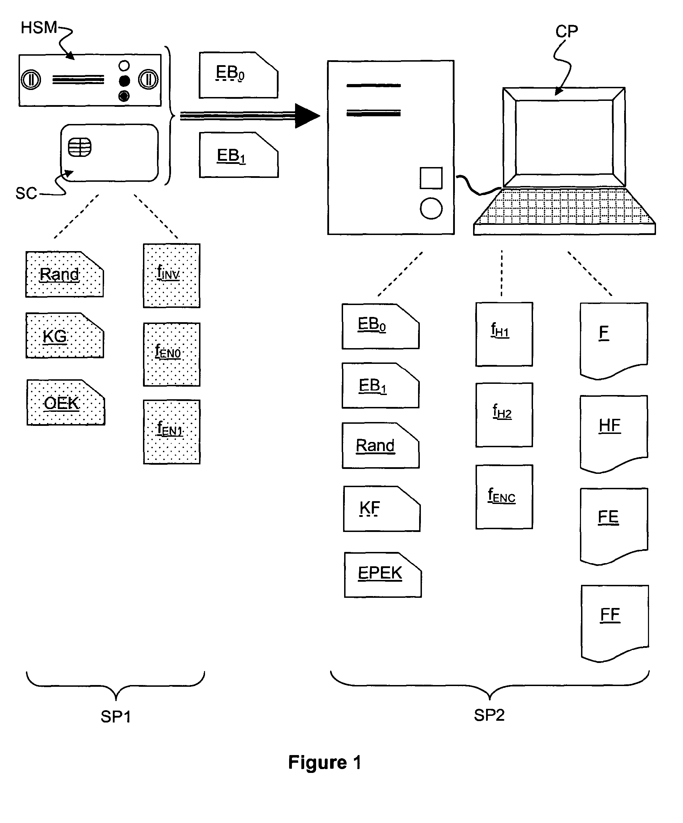

Figure 1 shows an embodiment of the invention involving a first security perimeter SP1 and a second security perimeter SP2. The first security perimeter SP1 comprises a hardware security module HSM or a smart-card SC. The second security perimeter SP2 comprises a computer CP. The level of security is superior in the first security perimeter SP1 relatively to the second security perimeter SP2.
The hardware security module HSM is a known physically secure, tamper-resistant security device. The smart-card SC is a known card comprising a physically secure, tamper-resistant microprocessor.
The computer CP represents an environment that is less secure than the hardware security module HSM or the smart-card SC.
The hardware security module HSM or the smart-card SC are peripherals to the computer CP.

The hardware security module HSM or the smart-card SC provide cryptographic facilities needed to implement some security tasks involved in the encryption and decryption method of the invention that require an important level of security. They will be referred as "secure hardware" in the description hereinafter.
The secure hardware may comprise encrypting circuit and/or owner decrypting circuit and/or escrow decrypting circuit. Associated computer software products (encryption and/or decryption) computer software products may be loaded into said circuits so that these circuits can carry out the various encryption and decryption tasks that will be described hereinafter.
The computer CP can also provide cryptographic facilities needed to implement some security tasks involved in the encryption and decryption method of the invention that require a less important level of security.
The security tasks are for example key and/or data encryption, key verification, key storing, key management, cryptographic functions and algorithms processing.

In the Figures 1, 2, 3, 4 and 5 illustrating the encryption and decryption methods of the invention, any keys, functions and algorithms that are represented in grey color reside in the first security perimeter SP1 and never leave this security perimeter, while the other keys, functions and algorithms that are represented in white may reside in the second security perimeter SP2.

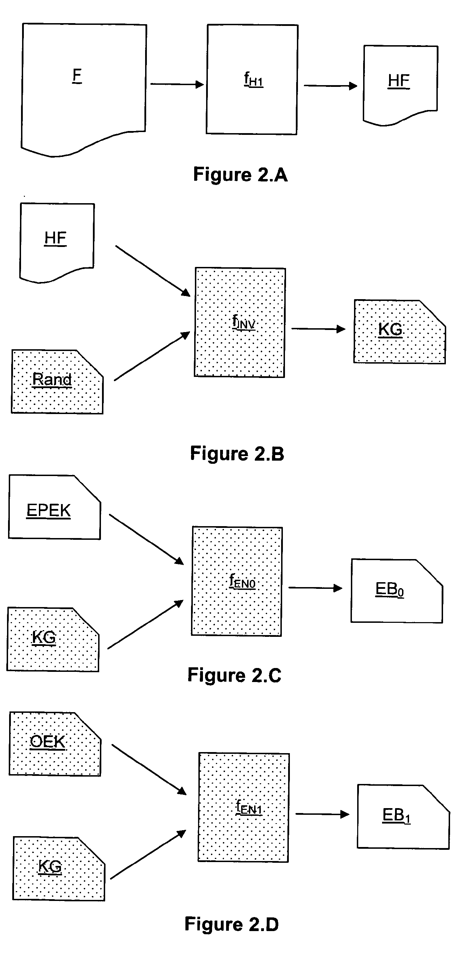

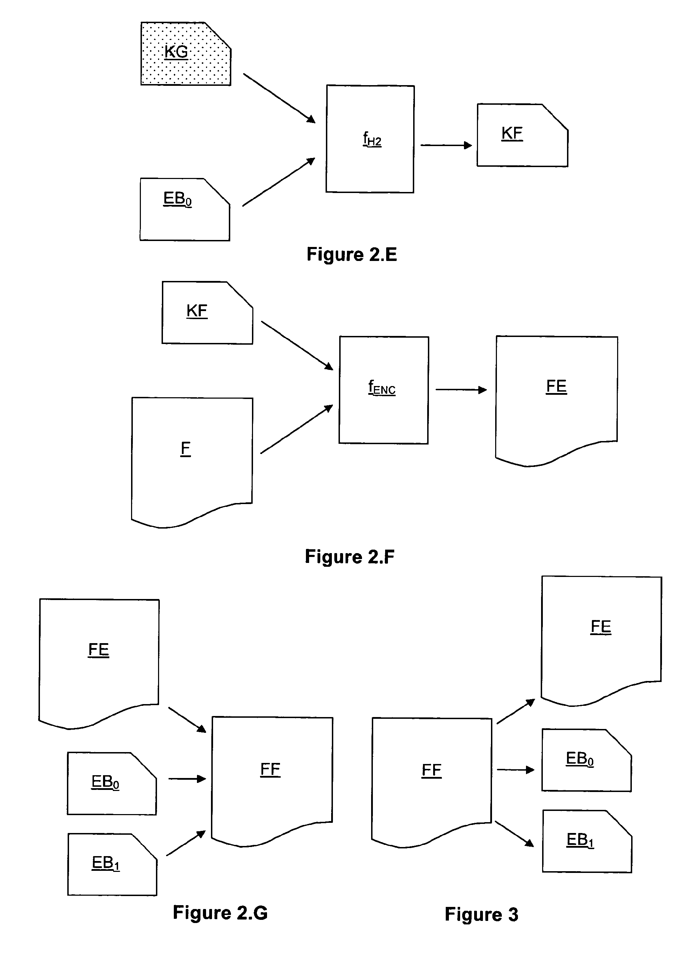

Figures 2.A, 2.B, 2.C, 2.D, 2.E, 2.F and 2.G illustrate the different steps of the encryption method of the invention used for encrypting a data file F, said encryption method being adapted for the implementation of an escrowing service.

Figure 2.A illustrates a selection step. The selection step consists in generating a hashed file HF by calculating a first hashing function f_{H1} of the data file F of an owner [HF = f_{H1}(F)]. The first hashing function f_{H1} is a well known transformation that takes the data file F as an input and returns a fixed-size string whatever the size of the data file F. The fixed-size string will be referred in the present description as the hashed file HF. Preferably, the hashing function f_{H1} is relatively easy to compute for any given data file F and is a one-way function (in the sense that it is almost computationally infeasible to invert).
The selection step may be performed by the computer CP.

Figures 2.B, 2.C and 2.D illustrate a block generation steps. The block generation steps consist in generating firstly a secret key KG and then an escrow block EB₀ and an owner block EB₁.

Figure 2.B illustrates the secret key KG generation step. A pseudo-random number RAND is generated by the secure hardware. Then, the secure hardware calculates an invertible function f_{INV} of the pseudo-random number RAND and the hashed filed HF. The result of the invertible function f_{INV} is the secret key KG [KG = f_{INV}(RAND, HF)]. The secret key KG is stored in the secure hardware.

Figure 2.C illustrates the escrow block EB₀ generation step.
An escrow public encryption key EPEK is available from the escrow service. The escrow public encryption key EPEK is a public key, namely a publicly available and distributed component of an asymmetric cryptographic key. The escrow public encryption key EPEK may be stored and distributed through a known public key infrastructure (PKI system).
The secure hardware processes a public key type encryption algorithm f_{EN0} of the secret key KG and the escrow public encryption key EPEK. The result of the encryption algorithm f_{EN0} is the escrow block EB₀ [EB₀ = f_{EN0}(EPEK,KG)]. The escrow block EB₀ may be stored in the computer CP.
The public key type encryption algorithm f_{EN0} is a known encryption algorithm based on the use of a pair of keys, a public key and a private key. For example, the encryption algorithm can be an asymmetric cryptographic algorithm like the well known RSA (Rivest, Shamir, and Adleman) algorithm.

Figure 2.D illustrates the owner block EB₁ generation step.
An owner encryption key OEK is stored in the secure hardware. The owner encryption key OEK is a private key, namely a cryptographic key known only to the owner and constituting a secret component of an asymmetric cryptographic key. The owner encryption key OEK may also be a symmetric key (the same key being used to encrypt and decrypt data).
The secure hardware processes an owner type encryption algorithm f_{EN1} of the secret key KG and the owner encryption key OEK. The result of the encryption algorithm f_{EN1} is the owner block EB₁ [EB₁ = f_{EN1}(OEK,KG)]. The owner block EB₁ may be stored in the computer CP.
The owner type encryption algorithm f_{EN1} may be a public key type encryption algorithm or a secret key type encryption algorithm.
The secret key type encryption algorithm is a known encryption algorithm in which a same key is held and used by a sender and a recipient. The single key is used for both encryption and decryption and must be kept a secret shared between the sender and the recipient. For example, the encryption algorithm can be a symmetric cryptographic algorithm like the well known DES (Data Encryption Standard) or Triple-DES (a particular operation mode of the DES algorithm).

Figures 2.E, 2.F and 2.G illustrate a final data file generation steps. The final data file generation steps consist in generating firstly a data file key KF, then an encrypted data file FE and subsequently the final data file FF.

Figure 2.E illustrates the data file key KF generation step. The data file key KF generation step consists in, firstly, combining the secret key KG with the escrow block EB₀ in order to form an input data for a hashing function. Then, the data file key KF is generated by calculating a second hashing function f_{H2} of the input data [KF = f_{H2}(KG+EB₀)].
The second hashing function f_{H2} may be identical to the first hashing function f_{H1} hereinbefore described.

Figure 2.F illustrates the encrypted data file FE generation step. The encrypted data file FE generation step consists in generating an encrypted data file FE. The data file key KF and the data file F are processed by a secret key type encryption algorithm f_{ENC} [FE = f_{ENC}(KF,F)]. For example, the secret key type encryption algorithm may be a symmetric cryptographic algorithm (e.g. DES or Triple-DES).

Figure 2.G illustrates the final data file FF generation step. The encrypted data file FE, the escrow block EB₀ and the owner block EB₁ are combined in order to form a final data file FF [FF = EB₀+EB₁+FE)]. For example, the escrow block EB₀ and the owner block EB₁ may be appended or pre-pended to the encrypted data file FE.

The final data file generation steps may be performed by the computer CP.

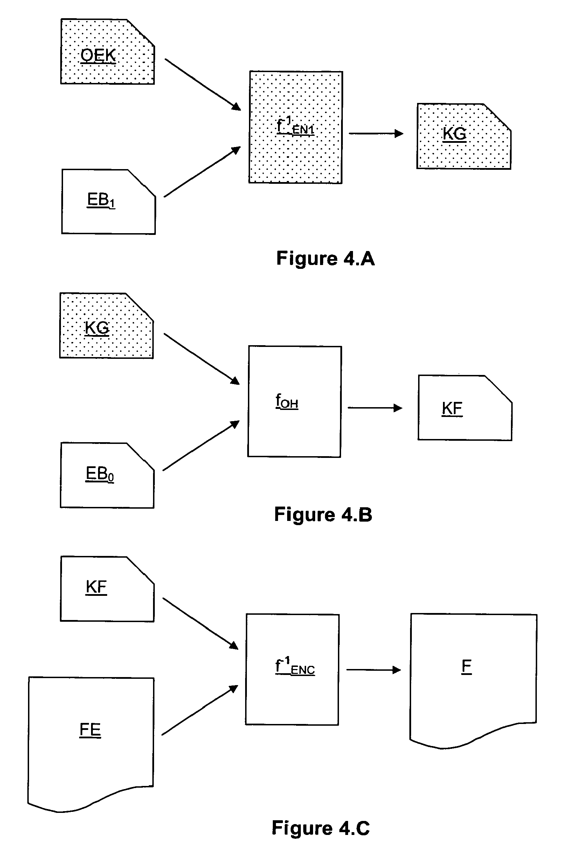

Figures 3, 4.A, 4.B and 4.C illustrate the different steps of the owner decryption method according to the invention used for decrypting a final data file FF. It is assumed that the final data file FF to be decrypted, has been previously encrypted according to the hereinbefore described encryption method. The owner decryption method enables the owner of the data file to recover the initial data file from an encrypted data file.

Figure 3 illustrates a first step of the owner decryption method. The first step consists in separating the encrypted data file FE, the escrow block EB₀ and the owner block EB₁ from the final data file FF [FF = EB₀+EB₁+FE)]. This step may be performed by the computer CP.

Figure 4.A illustrates a secret key KG generation step. This step consists in processing an inverse owner type encryption algorithm f⁻¹_{EN1} of the owner encryption key OEK and the owner block EB₁ [KG = f⁻¹_{EN1}(OEK, EB₁)]. The inverse owner type encryption algorithm f⁻¹_{EN1} may be an inverse public key type encryption algorithm or an inverse secret key type encryption algorithm depending on the encryption algorithm f_{EN1} used during the owner block generation step.

Figure 4.B illustrates a data file key KF generation step. Firstly, the secret key KG is combined with the escrow block EB₀ in order to form an input data for a hashing function. Then, the data file key KF is generated by calculating an owner hashing function f_{OH} of the input data [KF = f_{OH}(KG+EB₀)]. Advantageously, the owner hashing function f_{OH} is identical to the first hashing function f_{H1} and the second hashing function f_{H2} hereinbefore described. This step may be performed by the computer CP.

Figure 4.C illustrates an unencrypted file F generation step. This step consists in processing an inverse secret key type encryption algorithm f⁻¹_{ENC} of the data file key KF and the encrypted data file FE [F = f⁻¹_{ENC}(KF,FE)]. The inverse secret key type encryption algorithm f⁻¹_{ENC} is the inverse function of the one used to encrypt the data file F (see Figure 2.F). This step may be performed by the computer CP.

Thus, it is possible to recover the pseudo-random number RAND and the hashed filed HF from the decrypted owner block EB₁ because f_{INV}⁻¹(KG) is equal to (RAND, HF).
Advantageously, the owner decryption method hereinbefore described allows the owner to further check the integrity of the decrypted file F. This can be done by comparing the original hashed data file with a hash of the just decrypted data file.

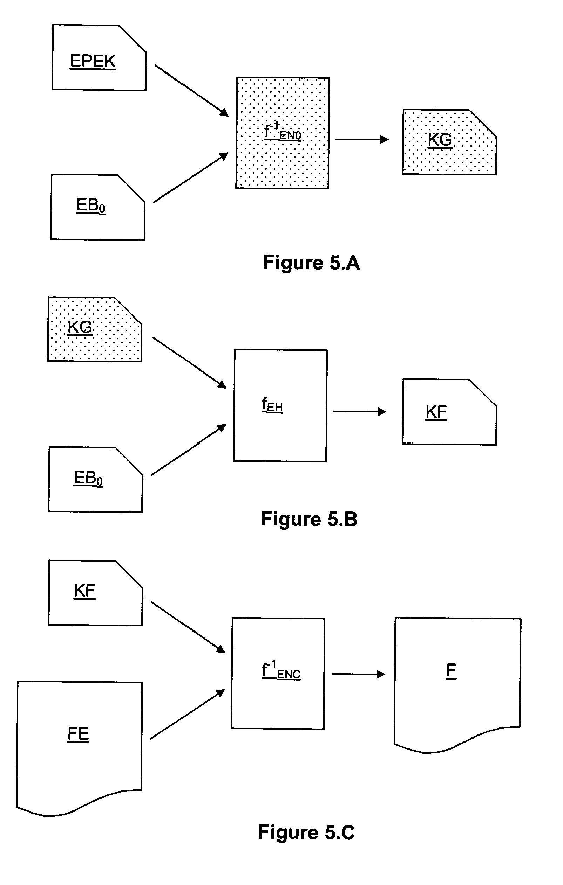

Figures 3, 5.A, 5.B and 5.C illustrate the different steps of the escrow decryption method according to the invention used for decrypting a final data file FF. It is assumed that the final data file FF to be decrypted, has been previously encrypted according to the hereinbefore described encryption method. The escrow decryption method enables the escrow service to recover the initial data file from an encrypted data file.

Figure 3 also illustrates a first step of the escrow decryption method. The first step consists in separating the encrypted data file FE, the escrow block EB₀ and the owner block EB₁ from the final data file FF [FF = EB₀+EB₁+FE)]. This step may be performed by the computer CP.

Figure 5.A illustrates a secret key KG generation step. This step consists in processing an inverse public key type encryption algorithm f⁻¹_{EN0} of the escrow public encryption key EPEK and the escrow block EB₀ [KG = f⁻¹_{EN0}(EPEK, EB₀)].

Figure 5.B illustrates a data file key KF generation step. Firstly, the secret key KG is combined with the escrow block EB₀ in order to form an input data for a hashing function. Then, the data file key KF is generated by calculating an escrow hashing function f_{EH} of the input data [KF = f_{EH}(KF+EB₀)]. Advantageously, the escrow hashing function f_{EH} is identical to the first hashing function f_{H1} and the second hashing function f_{H2} hereinbefore described. This step may be performed by the computer CP.

Figure 5.C illustrates an unencrypted file F generation step. This step consists in processing an inverse secret key type encryption algorithm f⁻¹_{ENC} of the data file key KF and the encrypted data file FE [F = f¹_{ENC}(KF,FE)]. The inverse secret key type encryption algorithm f¹_{ENC} is the inverse function of the one used to encrypt the data file F (see Figure 2.F). This step may be performed by the computer CP.

Thus, it is possible to recover the pseudo-random number RAND and the hashed filed HF from the decrypted escrow block EB₀ because f_{INV}⁻¹(KG) is equal to (RAND, HF).
Advantageously, the escrow decryption method hereinbefore described allows the escrow service to further check the integrity of the decrypted file F. This can be done by comparing the original hashed data file with a hash of the just decrypted data file.

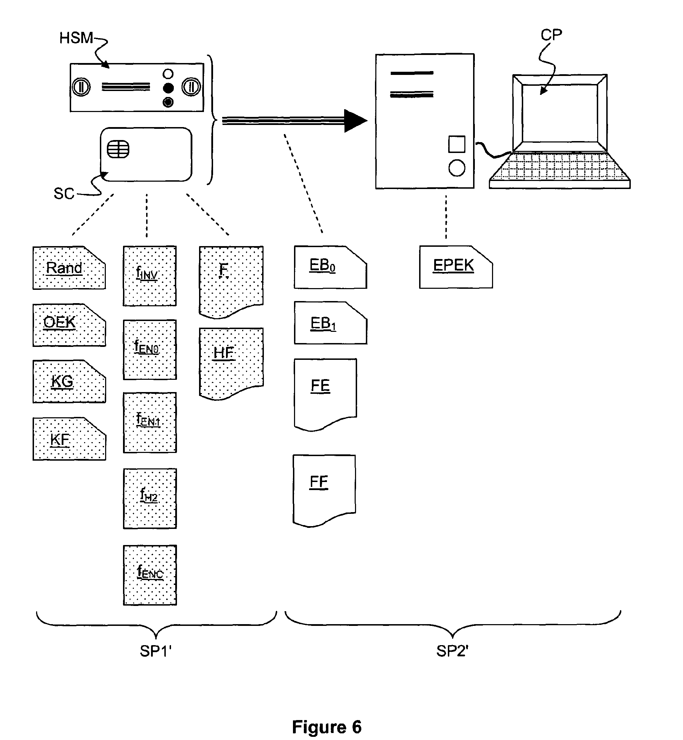

Figure 6 illustrates an alternative of the invention involving a first security perimeter SP1' and a second security perimeter SP2'. The first security perimeter SP1' comprises a hardware security module HSM or a smart-card SC. The second security perimeter SP2' comprises a computer CP. The level of security is superior in the first security perimeter SP1' relatively to the second security perimeter SP2'.
The encryption method, the owner and escrow decryption method according to this alternative are performed in a strictly identical manner as the hereinbefore described embodiment. This alternative of the invention differs from the hereinbefore described embodiment in that except for the escrow public encryption key EPEK, the escrow block EB₀, the owner block EB₁, the final data file FF and the encrypted data file FE, all the others keys (KF, KG, OEK), value (RAND) and files (F, HF) do not leave the secure hardware and the functions and algorithm (f_{INV}, F_{ENO}, f_{EN1}, f_{H2}, f_{ENC}) are calculated and/or processed within the secure hardware. The keys, functions and algorithms that are represented in grey color reside in the first security perimeter SP1' and never leave this security perimeter, while some keys and files that are represented in white may reside in the second security perimeter SP2'.

The hereinbefore description of the encryption and decryption methods focused on a unique escrowing service, also called a primary escrowing service. However, it will be apparent for a person skilled in the art that based on these methods, others escrowing services can be involved in the process.

For example, in case of a secondary escrowing service (in the sense that it is additional to the primary escrowing service) the encryption method differs from the hereinbefore described encryption method in that:
- a second escrow block EB₂ is generated by processing a second public key type encryption algorithm f_{EN2} of the secret key KG and a second escrow public encryption key EPEK2 [EB₂ = f_{EN2}(EPEK2,KG)], and
- the final data file FF is generated by combining the encrypted data file FE, the escrow block EB₀, the owner block EB₁ and the second escrow block EB₂ [FF = EB₀+EB₁+EB₂+FE)].
   Further, in case of a secondary escrowing service the escrow decryption method for the second escrow service is analog to the one relating to the primary escrow service hereinbefore described decryption method, in particular:

- a secret key KG is generated by processing an inverse second public key type encryption algorithm f⁻¹_{EN2} of the second escrow public encryption key EPEK2 and the second escrow block EB₂ [KG = f⁻¹_{EN2} (EPEK2,EB₂)],
- a data file key KF is generated by calculating an escrow hashing function f_{EH} of the secret key KG combined with the escrow block EB₀ [KF = f_{EH} (KG+EB₀)], and
- an unencrypted file F is generated by processing an inverse secret key type encryption algorithm F¹_{ENC} of the data file key KF and the encrypted data file FE [F = f¹_{ENC} (KF,FE)].
   Advantageously, the escrow hashing function f_{EH} is identical to the first hashing function f_{H1} and the second hashing function f_{H2} hereinbefore described.
   All the others steps of the encryption method, owner decryption method and primary escrow decryption method are strictly identical to the ones already described hereinbefore.

The drawings and their description hereinbefore illustrate rather than limit the invention.
Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. An encryption method for encrypting a data file (F), wherein the method comprises:
a) a selection step consisting in selecting parts of the data file (HF),
b) a block generation step consisting in generating:
- an escrow block (EB₀) based on selected parts of the data file (HF), and
- an escrow public encryption key (EPEK), and an owner block (EB₁) based on selected parts of the data file (HF) and an owner encryption key (OEK),
c) a final data file generation step consisting in generating an encrypted data file (FE) based on the escrow block (EB₀), and generating a final data file (FF) by combining the encrypted data file (FE), the escrow block (EB₀) and the owner block (EB₁).

2. An encryption method for encrypting a data file (F) according to claim 1, wherein:
a) the selection step consists in generating a hashed file (HF) by calculating a first hashing function (f_{H1}) of the data file (F) of an owner,
b) the block generation step consists in:
b1) generating a secret key (KG) by generating a pseudo-random number (RAND), and calculating an invertible function (f_{INV}) of the hashed filed (HF) and the pseudo-random number (RAND),
b2) generating an escrow block (EB₀) by processing a public key type encryption algorithm (f_{EN0}) of the secret key (KG) and an escrow public encryption key (EPEK),
b3) generating an owner block (EB₁) by processing an owner type encryption algorithm (f_{EN1}) of the secret key (KG) and an owner encryption key (OEK),
c) the final data file generation step consists in:
c1) generating a data file key (KF) by calculating a second hashing function (f_{H2}) of the secret key (KG) combined with the escrow block (EB₀),
c2) generating an encrypted data file (FE) by processing a secret key type encryption algorithm (F_{ENC}) of the data file key (KF) and the data file (F), and
c3) generating a final data file (FF) by combining the encrypted data file (FE), the escrow block (EB₀) and the owner block (EB₁).

3. An encryption method according to claim 2, wherein the owner type encryption algorithm (f_{EN1}) is a public key type encryption algorithm or a secret key type encryption algorithm.

4. An encryption method according to any one of the claims 2 to 3, wherein the first hashing function (f_{H1}) and the second hashing function (f_{H2}) are identical hashing function.

5. An encryption method according to any one of the claims 2 to 4, wherein the method further comprises the additional steps of:
- generating at least one second escrow block (EB₂) by processing at least a second public key type encryption algorithm (f_{EN2}) of the secret key (KG) and at least a second escrow public encryption key (EPEK2),
- generating a final data file (FF) by combining the encrypted data file (FE), the escrow block (EB₀), the owner block (EB₁) and the at least one second escrow block (EB₂).

6. An owner decryption method for decrypting a final data file (FF) comprising an encrypted data file (FE), an escrow block (EB₀) and an owner block (EB₁), wherein the method comprises:
a) generating a secret key (KG) by processing an inverse owner type encryption algorithm (f¹_{EN1}) of an owner encryption key (OEK) and the owner block (EB₁),
b) generating a data file key (KF) by calculating an owner hashing function (f_{OH}) of the secret key (KG) combined with the escrow block (EB₀), and
c) generating an unencrypted file (F) by processing an inverse secret key type encryption algorithm (f¹_{ENC}) of the data file key (KF) and the encrypted data file (FE).

7. An owner decryption method according to claim 6, wherein the inverse owner type encryption algorithm (f¹_{EN1}) is an inverse public key type encryption algorithm or an inverse secret key type encryption algorithm.

8. An escrow decryption method for decrypting a final data file (FF) comprising an encrypted data file (FE), an escrow block (EB₀) and an owner block (EB₁), wherein the method comprises:
a) generating a secret key (KG) by processing an inverse public key type encryption algorithm (f⁻¹_{EN0}) of an escrow public encryption key (EPEK) and the escrow block (EB₀),
b) generating a data file key (KF) by calculating an escrow hashing function (f_{EH}) of the secret key (KG) combined with the escrow block (EB₀), and
c) generating an unencrypted file (F) by processing an inverse secret key type encryption algorithm (f¹_{ENC}) of the data file key (KF) and the encrypted data file (FE).

9. A secondary escrow decryption method for decrypting a final data file (FF) comprising an encrypted data file (FE), an escrow block (EB₀), an owner block (EB₁) and a second escrow block (EB₂), wherein the method comprises:
a) generating a secret key (KG) by processing an inverse second public key type encryption algorithm (f¹_{EN2}) of the second escrow public encryption key (EPEK2) and the second escrow block (EB₂),
b) generating a data file key (KF) by calculating an escrow hashing function (f_{EH}) of the secret key (KG) combined with the escrow block (EB₀), and
c) generating an unencrypted file (F) by processing an inverse secret key type encryption algorithm (f⁻¹_{ENC}) of the data file key (KF) and the encrypted data file (FE).

10. A secure hardware comprising at least one encrypting circuit and a memory for storing a data file (F), wherein the encrypting circuit carries out:
a) a selection step consisting in selecting parts of the data file (HF),
b) a block generation step consisting in generating:
- an escrow block (EB₀) based on selected parts of the data file (HF), and
- an escrow public encryption key (EPEK), and an owner block (EB₁) based on selected parts of the data file (HF) and an owner encryption key (OEK),
c) a final data file generation step consisting in generating an encrypted data file (FE) based on the escrow block (EB₀), and generating a final data file (FF) by combining the encrypted data file (FE), the escrow block (EB₀) and the owner block (EB₁).

11. A secure hardware comprising at least one owner decrypting circuit and a memory for storing a final data file (FF) comprising an encrypted data file (FE), an escrow block (EB₀) and an owner block (EB₁), wherein the decrypting circuit carries out the steps of:
a) generating a secret key (KG) by processing an inverse owner type encryption algorithm (f⁻¹_{EN1}) of an owner encryption key (OEK) and the owner block (EB₁),
b) generating a data file key (KF) by calculating an owner hashing function (f_{OH}) of the secret key (KG) combined with the escrow block (EB₀), and
c) generating an unencrypted file (F) by processing an inverse secret key type encryption algorithm (f⁻¹_{ENC}) of the data file key (KF) and the encrypted data file (FE).

12. A secure hardware comprising at least one escrow decrypting circuit and a memory for storing a final data file (FF) comprising an encrypted data file (FE), an escrow block (EB₀) and an owner block (EB₁), wherein the decrypting circuit carries out the steps of:
a) generating a secret key (KG) by processing an inverse public key type encryption algorithm (f⁻¹_{EN0}) of an escrow public encryption key (EPEK) and the escrow block (EB₀),
b) generating a data file key (KF) by calculating an escrow hashing function (f_{EH}) of the secret key (KG) combined with the escrow block (EB₀), and
c) generating an unencrypted file (F) by processing an inverse secret key type encryption algorithm (f⁻¹_{ENC}) of the data file key (KF) and the encrypted data file (FE).

13. A secure hardware according to any one of the claims 10 to 12, wherein the secure hardware is a hardware security module (HSM) or a microprocessor type card (SC) coupled to a computer (CP).

14. An encrypting computer-program product for a secure hardware arranged to encrypt a data file, the computer-program product comprising a set of instructions that, when loaded into an encrypting circuit of the secure hardware, causes the secure hardware to carry out:
a) a selection step consisting in selecting parts of a data file (HF),
b) a block generation step consisting in generating:
- an escrow block (EB₀) based on selected parts of the data file (HF), and
- an escrow public encryption key (EPEK), and an owner block (EB₁) based on selected parts of the data file (HF) and an owner encryption key (OEK),
c) a final data file generation step consisting in generating an encrypted data file (FE) based on the escrow block (EB₀), and generating a final data file (FF) by combining the encrypted data file (FE), the escrow block (EB₀) and the owner block (EB₁).

15. An owner decrypting computer-program product for a secure hardware arranged to decrypt a data file, the computer-program product comprising a set of instructions that, when loaded into a decrypting circuit of the secure hardware, causes the secure hardware to carry out:
a) recovering an encrypted data file (FE), an escrow block (EB₀) and an owner block (EB₁) from a final data file (FF),
b) generating a secret key (KG) by processing an inverse owner type encryption algorithm (f¹_{EN1}) of an owner encryption key (OEK) and the owner block (EB₁).
c) generating a data file key (KF) by calculating an owner hashing function (f_{OH}) of the secret key (KG) combined with the escrow block (EB₀), and
d) generating an unencrypted file (F) by processing an inverse secret key type encryption algorithm (f⁻¹_{ENC}) of the data file key (KF) and the encrypted data file (FE).

16. An escrow decrypting computer-program product for a secure hardware arranged to decrypt a data file, the computer-program product comprising a set of instructions that, when loaded into a decrypting circuit of the secure hardware, causes the secure hardware to carry out:
a) recovering an encrypted data file (FE), an escrow block (EB₀) and an owner block (EB₁) from a final data file (FF),
b) generating a secret key (KG) by processing an inverse public key type encryption algorithm (f⁻¹_{EN0}) of an escrow public encryption key (EPEK) and the escrow block (EB₀),
c) generating a data file key (KF) by calculating an escrow hashing function (f_{EH}) of the secret key (KG) combined with the escrow block (EB₀), and
d) generating an unencrypted file (F) by processing an inverse secret key type encryption algorithm (f⁻¹_{ENC}) of the data file key (KF) and the encrypted data file (FE).
